# EUROPÄISCHE PATENTSCHRIFT

(11) **EP 2 172 604 B1**
(45) Veröffentlichungstag und Bekanntmachung des Hinweises auf die Patenterteilung: **23.03.2016**
(21) Anmeldenummer: 09171668.8
(22) Anmeldetag: 29.09.2009
(51) Int. Cl.: F16C 29/04, E04G 3/34, E04G 3/28, E04G 13/06, E01D 21/00

(54) **Führungssystem mit Rollenbock, insbesondere zur Führung und Befestigung einer Montagebühne über eine Laufschiene**
Guiding system with roller block, in particular for guiding and mounting an assembly platform with a drive rail
Système de guidage avec un support à rouleaux, notamment pour le guidage et la fixation d'une plateforme de montage sur un rail de guidage

(30) Priorität: 01.10.2008 DE 202008013030 U
(43) Veröffentlichungstag der Anmeldung: 07.04.2010
(73) Patentinhaber: Peri GmbH, 89264 Weissenhorn (DE)
(72) Erfinder: Braun, Hans, 87700, Memmingen (DE)
(74) Vertreter: Kohler Schmid Möbus Patentanwälte

(56) Entgegenhaltungen:
- DE-A1- 19 858 186
- GB-A- 2 100 685
- US-A- 5 048 640
- US-B1- 6 347 887
- ALLGEMEINE BAUZEITUNG: "Neuer Gesimsschalwagen beschleunigt Ablauf", Allgemeine Bauzeitung, Nr. 38 21. September 2007 (2007-09-21), Seiten 1-24, XP002732390, Internet Gefunden im Internet: URL:http://allgemeinebauzeitung.de/cs-cz/a bz-archiv.aspx [gefunden am 2014-11-12]

## Beschreibung

Die Erfindung betrifft ein Führungssystem, umfassend
a) wenigstens einen Rollenbock, insbesondere zur Führung und Befestigung einer mit einer Laufschiene versehenen Montagebühne bei der Fertigung eines Betonbauwerks, umfassend mindestens ein erstes Laufrad und ein zweites Laufrad, die an einem Grundkörper des Rollenbocks drehbar gelagert sind, und umfassend Befestigungsmittel zur direkten oder indirekten Befestigung des Rollenbocks an einer Bauwerksfläche, insbesondere einer überhängenden Bauwerksfläche,
   wobei eine erste Drehachse, um die das erste Laufrad drehbar ist, bezüglich einer zweiten Drehachse, um die das zweite Laufrad drehbar ist, nicht parallel ausgerichtet ist,
   und wobei das erste Laufrad bezüglich der ersten Drehachse axial verschieblich gelagert ist, und das zweite Laufrad bezüglich der zweiten Drehachse axial verschieblich gelagert ist und
b) wenigstens eine Haltevorrichtung, insbesondere wobei die wenigstens eine Haltevorrichtung zur Befestigung einer Montagebühne ausgebildet ist,
   wobei in der Haltevorrichtung eine Laufschiene ausgebildet ist, die auf die Laufräder des mindestens einen Rollenbocks aufsetzbar ist,
   und wobei die Laufschiene Anlagekanten zur Anlage der Laufräder ausbildet, insbesondere wobei eine Innenkontur der Laufschiene im Bereich der Anlagekanten einer Außenkontur der Laufräder entspricht.

Ein derartiges Führungssystem ist bekannt geworden durch die DE 198 58 186 A1.

Bei der Fertigung von Betonbrücken wird eine Pfeilerkostruktion mit einem Brückenüberbau versehen. Der Brückenüberbau weist in vielen Fällen eine Kragplatte auf, die seitlich über die Pfeilerkonstruktion hinaus ragt, und die Grundlage für eine Fahrbahn der Brücke bildet.

Insbesondere um eine bei der Fertigung der Kragplatte aufgetretene Welligkeit der Kragplatte in Längsrichtung der Brücke auszugleichen oder zu kaschieren, wird an die seitlich überstehenden Ränder der Kragplatte eine so genannte Gesimskappe in Schalungstechnik anbetoniert. Die Gesimskappe erstreckt sich in der Regel bis erheblich unterhalb des Rands der Kragplatte, und dient oftmals auch zur Ausbildung eines Gehwegs. Zur Fertigung einer Gesimskappe in Schalungstechnik muss der Raum, den die Gesimskappe einnehmen soll, mit Schalelementen umbaut und mit flüssigem Beton gefüllt werden. Nach dem Aushärten des flüssigen Betons können die Schalelemente entfernt werden.

In der Praxis werden Gesimskappen abschnittsweise anbetoniert. Im Bereich des zu betonierenden Abschnitts wird am Rand der Kragplatte eine Montagebühne angeordnet, auf der die benötigten Schalelemente befestigt werden. Nach Abschluss der Betonierarbeiten eines Abschnitts wird die Montagebühne zum nächsten zu betonierenden, benachbarten Abschnitt versetzt.

Um das Versetzen einer Montagebühne zu erleichtern, ist es bekannt, an der Unterseite einer Kragplatte in der Nähe des seitlichen Randes der Kragplatte eine so genannte Kappen-Schalungsbahn einzurichten, vgl. "Gesamtkatalog für Brückenbau und Spezialtiefbau" der Firma Quick, Schwerte, DE, Stand 4/2003, Seiten 47-53. An der Unterseite der Kragplatte werden dabei zwei so genannte Halfenschienen verankert, die in Längsrichtung der Brücke verlaufen. An der Montagebühne sind mehrere Doppelrollen (mit zwei Laufrädern montiert auf einer gemeinsamen Achse) befestigt, die in den Halfenschienen geführt sind. Dadurch ist die Montagebühne entlang der Halfenschienen, und damit in Längsrichtung der Brücke, zum Versetzen der Montagebühne zu einem neuen, zu betonierenden Abschnitt auf einfache und schnelle Weise verfahrbar.

Aus dem Zeitungsartikel "Neuer Gesimsschalwagen beschleunigt Ablauf" auf der Seite 17 der Allgemeinen Bauzeitung, Rubrik "Tunnel- und Brückenbau", Nr. 38 vom 21.09.2007 ist es bekannt, die Aufhängung einer Montagebühne an der Unterseite einer Kragplatte demgegenüber umzukehren. An der Unterseite der Kragplatte wird hierbei eine Anzahl von Rollenböcken mit Doppelrollen befestigt (so genannte Rollenstrecke), und an der Montagebühne sind Halfenschienen angebracht, die über die Rollenböcke geführt werden. Dadurch kann die Montagebühne entlang der Rollenstrecke verfahren werden.

Mit den aus dem Stand der Technik bekannten Techniken ist es zwar möglich, eine Montagebühne beim Versetzen zu führen; diese Techniken sind jedoch wenig geeignet, die Montagebühne während des Betonierens der Gesimskappe alleine zu halten.

Um die Doppelrollen in den Halfenschienen verfahren zu können, muss eine gewisse Freigängigkeit der Laufräder in den Halfenschienen verbleiben. Insbesondere darf eine Doppelrolle in einer Halfenschiene nicht verkeilen, wenn die Schienenbreite (etwa in Folge von Fertigungstoleranzen) in ihrer Breite etwas schwankt und sich insbesondere verjüngt. Daher sind im Stand der Technik die Doppelrollen mit seitlichem Spiel in den Halfenschienen gelagert.

Wird nun auf die Montagebühne eine seitliche Kraft ausgeübt, so droht die Montagebühne sich seitlich um das in den Halfenschiene eingerichtete Spiel zu verschieben. Solche seitlichen Kräfte können beispielsweise durch Windlast, oder auch durch den Druck des flüssigen Betons, der im Bereich des seitlichen Rands der Kragplatte versucht, die Schalung zu spreizen, entstehen. Falls die Montagebühne - und damit die gesamte Schalung - seitlich verschoben wird, kann es zum Austritt flüssigen Betons, zumindest aber Maß-Ungenauigkeiten bei der fertigen Gesimskappe kommen.

Für den Betoniervorgang muss daher eine Montagebühne zusätzlich gegen seitliches Verfahren gesichert werden. Für die Kappen-Schalungsbahn von Quick ist beispielsweise vorgesehen, während des Betonierens die Montagebühne mittels Montageankern an der Kragplatte zu verspannen. Das Setzen und Entfernen der Montageanker erfordert jedoch einen erheblichen Zeit- und Arbeitsaufwand vor und nach dem Betonieren eines Abschnitts einer Gesimskappe, so dass insgesamt das Versetzen der Montagebühne relativ langsam erfolgt.

Die DE 198 58 186 A1 beschreibt eine Schalung zum Betonieren von auskragenden Betonteilen. In einer Ausführungsform ist an einem vertikalen Stahlträger eine Rahmenkonstruktion mittels Aufhängungen befestigt, die an dem Stahlträger befestigte Rollköpfe und in den Rollköpfen geführte Tragschienen umfassen. Die Tragschienen sind mit zwei T-Schenkeln ausgeführt. In den Rollköpfen sind zwei Rollen angeordnet, die um 90° gegeneinander gedrehte Drehachsen aufweisen. Die untere Rolle dient zur Aufnahme von vertikalen Kräften.

### Aufgabe der Erfindung

Es ist die Aufgabe der vorliegenden Erfindung, den Zeit- und Arbeitsaufwand zum Versetzen einer Montagebühne, insbesondere beim Fertigen einer Gesimskappe einer Brücke, zu verringern.

### Kurze Beschreibung der Erfindung

Diese Aufgabe wird gelöst durch ein Führungssystem der eingangs genannten Art, dass dadurch gekennzeichnet ist, dass die Laufschiene eine erste und eine zweite Lasteintragkante ausbildet, die in aufgesetztem Zustand jeweils von der gleichen Seite am ersten und zweiten Laufrad anliegen,
dass die Laufschiene eine erste und eine zweite Begrenzungskante ausbildet, die in aufgesetztem Zustand jeweils von gegenüberliegenden Seiten am ersten und zweiten Laufrad anliegen,
dass die Krafteintragsrichtungen in die Laufräder, die sich durch die Anlage des jeweiligen Laufrades an seine zugehörige Lasteintragskante und seine zugehörige Begrenzungskante ergeben, gegenüber der Drehachse des Laufrades jeweils geneigt ausgerichtet sind, und dass der maximale Verschiebeweg für alle Laufräder wenigstens 5mm, bevorzugt wenigstens 10mm beträgt.

Ein Rollenbock wird bevorzugt zum Einrichten einer Rollenstrecke eingesetzt, etwa an der Unterseite einer Kragplatte einer teilgefertigten Brücke. Dazu werden Rollenböcke über die Befestigungsmittel am Bauwerk befestigt. Auf die Laufräder des Rollenbocks kann dann eine Laufschiene aufgesetzt werden. Die Laufschiene umgreift dabei die mindestens zwei Laufräder des Rollenbocks von wenigstens drei Seiten.

Von einer Seite (typischerweise von oben) wird die Last, etwa das Gewicht der Montagebühne, auf die Laufräder aufgelegt (Lasteintragsseite). Aufgrund ihrer axialen Verfahrbarkeit weichen die Laufräder dieser Last in verschiedene Richtungen (entsprechend der nicht-parallelen Ausrichtung der Drehachsen) aus, bis ihr Verfahrweg durch die beiden anderen, sich gegenüber liegenden Seiten (seitlich) begrenzt wird (Begrenzungsseiten).

Damit passt sich die Stellung der Räder automatisch der Breite der Laufschiene an, ohne dass ein seitliches Spiel der Laufräder in der Laufschiene verbleibt. Dadurch kann der Rollenbock relativ zur Laufschiene unter Last seitlich nicht verfahren werden. Beim Verfahren der Laufschiene relativ zum Rollenbock rollen die Laufräder an allen drei sie umgebenden Seiten (oder Anlagekanten) ab. Die Abrollrichtung (oder Laufrichtung) der Laufräder ist dabei parallel zu einer hier als Lagergeraden bezeichneten Geraden, die die erste und die zweite Drehachse schneidet und zur ersten und zweiten Drehachse senkrecht verläuft. Die Anlagekanten der Laufschiene verlaufen bei aufgesetztem/eingesetztem Rollenbock lokal näherungsweise parallel zur Lagergeraden des Rollenbocks (Man beachte aber, dass die Laufschiene Kurven oder Gelenkstellen ausbilden kann).

Eine Schwankung der Schienenbreite - entsprechend einer Veränderung des Abstandes der Begrenzungsseiten - kann durch ein axiales Verfahren der Laufräder ausgeglichen werden. Verengt sich die Schiene, so laufen die Laufräder in axialer Richtung aufeinander zu (bzw. sie fahren auf die Lagergerade, welche die Drehachsen der Laufräder senkrecht schneidet, zu). Verbreitert sich die Schiene, so laufen die Laufräder in axialer Richtung voneinander weg (bzw. sie fahren von der Lagergeraden weg).

Gemäß der Erfindung beträgt der maximale axiale Verschiebeweg für alle Laufräder wenigstens 5 mm, bevorzugt wenigstens 10 mm. Maximale Verschiebewege in den angegebenen Bereichen sind in der Regel ausreichend für die Anforderungen an einer typischen Baustelle, insbesondere zum Ausgleich von üblichen Schienenbreitenschwankungen infolge von Fertigungstoleranzen oder auch geringfügigen Beschädigungen ("Beulen"). Man beachte, dass der zum Ausgleich von bestimmten Schienenbreitenschwankungen notwendige axiale Verschiebeweg von der Neigung der Drehachsen abhängt. Der axiale Verschiebeweg wird im Rahmen der vorliegenden Erfindung typischerweise durch Anschläge begrenzt, sodass die Laufräder unverlierbar gehalten sind. Die axialen Positionen von Anschlägen, insbesondere in Form von Metallringen, können dabei auch in axialer Richtung verstellbar ausgebildet sein, sodass sie auf die durch die Genauigkeit der Schienenbreite zu erwartende axiale Verschiebung der Laufräder eingestellt werden können. Dann müssen die Anschläge aber hinreichend sichere Feststellvorrichtungen aufweisen, sodass keine unbeabsichtigte Verstellung während des Betriebs möglich ist.

Werden mehrere Rollenböcke entlang einer beabsichtigten Route, wie zum Beispiel an der Unterseite einer Kragplatte, verankert ("Rollenstrecke"), so ist es möglich, die auf die Laufräder aufgesetzte Laufschiene entlang dieser Route zu verfahren. Um das Durchlaufen von Routen mit gekrümmten Radien zu ermöglichen, können hintereinander gereihte Schienenabschnitte gelenkig miteinander verbunden sein, sodass ein derartiger Schienenstrang dem Routenverlauf folgen kann. Das Einfädeln des vordersten Schienabschnitts in den nächstgelegenen Rollenbock wird dabei durch die zentrierende Wirkung der Laufräder, welche gegenüber den Schienenkanten ihre Radrundungen präsentieren, unterstützt. In besonderer Weise vorteilhaft erweist sich dabei, dass die Laufräder geneigt angeordnet sind, sodass sich der zentrierende Effekt bezüglich zweier Kanten (in der Regel in der Horizontalen als auch in der Vertikalen) auswirkt.

Über die Lasteintragskanten wird das Gewicht der Haltevorrichtung und der typischerweise an dieser befestigten Montagebühne auf den Rollenbock übertragen. Die Begrenzungskanten beschränken dann den Verschiebeweg der der Last axial ausweichenden Laufräder. Dadurch wird die Last von den Begrenzungskanten mit aufgenommen, und ein axiales Spiel wird beseitigt. Durch die geneigte Orientierung der Krafteintragsrichtungen, die sich typischerweise durch entsprechend geneigte Anlageflächen der Lasteintragskanten und Begrenzungskanten und/oder die Außenkontur der Laufräder ergeben, wird die Umsetzung des Krafteintrags in eine Verschiebung des Laufrades in axialer Richtung und ein Abrollen des Laufrades auf den Anlagekanten ermöglicht. Typische Neigungswinkel der Krafteintragsrichtungen gegenüber den Drehachsen der Laufräder liegen im Bereich 25° bis 65°, bevorzugt ca. 45°.

Bevorzugt entspricht eine Innenkontur der Laufschiene im Bereich der Anlagekanten einer Außenkontur der Laufräder. Dadurch wird ein besonders guter Griff der Laufräder in ihren Anlagekanten erreicht. Die Spielfreiheit des Zusammenwirkens zwischen Laufschiene und Rollenbock wird dadurch zusätzlich unterstützt. Der Lasteintrag in die Laufräder erfolgt großflächiger.

Ein Rollenbock vermag sich im Rahmen der Erfindung selbsttätig (durch Schwerkraftwirkung) relativ zur Laufschiene auszurichten. Durch die Schrägstellung der Laufräder, die nicht nur zueinander, sondern typischerweise auch bezüglich der Stirnflächen einer Laufschiene besteht, kann auch das Einfädeln des Rollenbocks erleichtert werden, denn der Rollenbock präsentiert typischerweise gegenüber zwei (und nicht nur einer) stirnseitigen Schienenkanten eine Radrundung seine Laufräder. Man beachte auch, dass die erste und zweite Drehachse sich schneiden können, wodurch ein sehr kompakter Bau erreicht werden kann, oder aber hintereinander (entlang der Lagergeraden) angeordnet sein können.

Durch die seitliche Spielfreiheit der Laufschiene gegenüber dem Rollenbock ist es möglich, "auf die Rollen" zu betonieren; mit anderen Worten, beim Betonieren wird das Gewicht einer Betonschalung auf einer Montagebühne nur über die Laufräder ("Rollen") des Rollenbocks gehalten, und die Montagebühne wird nur über die Rollen gegen ein laterales (seitliches, quer zur Verfahrrichtung der Laufschienen gerichtetes) Verschieben gesichert. Zusätzlich können jedoch Maßnahmen (etwa seitliche Ausleger) gegen ein Verkippen der Montagebühne vorgesehen sein; dabei können jedoch verankerungslose Laufrollen eingesetzt werden, die ein Verfahren der Montagebühne beim Versetzen nicht behindern.

Beim Versetzen einer Montagebühne, die über Rollenböcke gehalten ist, ist somit ein Einrichten und Lösen einer Sicherung gegen seitliches Verschieben unnötig, und entsprechend beschleunigt kann das versetzen der Montagebühne erfolgen.

Ein Rollenbock kann im Rahmen der Erfindung grundsätzlich mit gewöhnlichen Halfenschienen verwendet werden, so dass bei vorhandenen Montagesystemen nur der Rollenbock ausgetauscht zu werden braucht. Die Laufräder liegen dann beide schräg in der Halfenschiene.

Man beachte, dass der Rollenbock nicht nur als Teil einer Rollenstrecke an einer Bauwerksfläche, insbesondere überhängenden Bauwerksfläche, befestigt werden kann, sondern alternativ auch an einer Montagebühne befestigt werden kann, wobei dann die zugehörige Laufschiene an der Bauwerksfläche befestigt ist; als Befestigungsmittel zur hier indirekten Befestigung des Rollenbocks an der Bauwerksfläche dienen dann die Laufräder, die in die am Bauwerk befestigte Laufschiene eingesetzt werden können. Die Vorteile der spielfreien Halterung der Montagebühne kommen dann ebenfalls zur Geltung.

### Bevorzugte Ausführungsformen der Erfindung

### Ausführungsformen zu Rollenböcken

Bei einer bevorzugten Ausführungsform des erfindungsgemäßen Führungssystems weist der Rollenbock ein oder mehrere weitere Laufräder auf, wobei ein jedes weitere Laufrad jeweils um eine weitere Drehachse drehbar ist, die parallel zur ersten Drehachse oder parallel zur zweiten Drehachse ausgerichtet ist, und wobei ein jedes weitere Laufrad bezüglich seiner jeweiligen weiteren Drehachse axial verschieblich gelagert ist. Diese Ausführungsform weist, insbesondere bei Hintereinanderanordnung der Laufräder, eine vergrößerte Richtungsstabilität in Schienenlängsrichtung auf; ein Verdrehen um eine (in der Praxis meist vertikal verlaufende) Hochachse wird erschwert. Darüber hinaus bietet eine größere Anzahl von Laufrädern die Möglichkeit, bei entsprechend stabiler Ausgestaltung des Grundkörpers des Rollenbocks, die tragbare Last zu erhöhen. Durch die erhöhte Anzahl an Kontaktstellen zwischen Rollenbock und Laufschiene reduzieren sich die limitierenden Druckspannungen im Kontaktbereich. Gemäß dieser Ausführungsform werden im Prinzip zwei Gruppen von Laufrädern mit innerhalb einer jeden Gruppe jeweils parallelen Drehachsen ausgebildet.

Eine weitere, bevorzugte Ausführungsform sieht vor, dass die Drehachsen aller Laufräder derart angeordnet sind, dass eine Lagergerade alle Drehachsen schneidet und zu allen Drehachsen senkrecht verläuft. Dadurch können alle Laufräder in die gleiche Laufrichtung abrollen; dies vermeidet ungleichmäßigen Räderverschleiß.

Besonders bevorzugt ist weiterhin eine Ausführungsform, die dadurch gekennzeichnet ist, dass insgesamt genau drei Laufräder mit hintereinander angeordneten Drehachsen vorhanden sind, und dass die beiden äußeren Drehachsen parallel ausgerichtet sind. Diese Anordnung hat sich in der Praxis besonders bewährt. Die Ausführungsform erreicht eine gute Richtungsstabilität, begrenzt aber aufgrund ihrer Kürze kaum die Ausbildung von Kurven oder Gelenkstellen in der Laufschiene. Der Fertigungsaufwand einer solchen dreirädrigen Ausführungsform bleibt aufgrund der geringen Anzahl an Teilelementen überschaubar.

Eine weitere bevorzugte Ausführungsform sieht vor, dass im Rollenbock für jedes Laufrad jeweils ein Lagerachselement ausgebildet ist, das koaxial zur zugehörigen Drehachse des Laufrades verläuft, wobei das Lagerachselement im Rollenbock starr ausgebildet ist, und dass das jeweilige Laufrad auf seinem zugehörigen Lagerachselement verschieblich gelagert ist. Die axial nicht beweglichen (=starren) Lagerachselemente weisen typischerweise einen runden Querschnitt auf. Als Lagerachselemente kommen zum Beispiel mit dem Grundkörper des Rollenbocks verschweißte Rohre in Betracht, deren Längsachsen mit den Drehachsen zusammen fallen und auf denen die Laufräder drehbar und axial verschieblich gelagert sind. In dieser Form lässt sich der Rollenbock einfach herstellen. Alternativ können z.B. aber auch die Laufräder starr an Achsstiften befestigt sein, die verschieblich im Rollenbock (etwa in Bohrungen) gelagert sind.

Bevorzugt ist auch eine Ausführungsform, bei der die Befestigungsmittel als Schwenkhalterung oder Teil einer Schwenkhalterung ausgebildet sind, mittels der der Grundkörper des Rollenbocks um eine Schwenkachse drehbar gelagert werden kann. Die Einrichtung der Schwenkachse ermöglicht eine Entkopplung der Rollenbockausrichtung von der lokalen Neigung, insbesondere Welligkeit, der Bauwerksfläche, an der der Rollenbock direkt oder indirekt befestigt ist. Die Schwenkachse ist typischerweise parallel zur Laufrichtung bzw. der Lagergeraden, die die Drehachsen senkrecht schneidet, ausgerichtet.

Eine bevorzugte Ausführungsform ist dadurch gekennzeichnet, dass die erste Drehachse und die zweite Drehachse bezüglich einer ersten Hilfsebene gegengleich geneigt sind, wobei die erste Hilfsebene sowohl die Schwenkachse als auch eine Lagergerade enthält, wobei die Lagergerade die erste Drehachse und die zweite Drehachse schneidet und senkrecht auf der ersten Drehachse und der zweiten Drehachse steht. Die dieser Ausführungsform weist ein großes Maß an Symmetrie auf, was die Lastverteilung im Rollenbock verbessert. Eine über den Rollenbock aufgebrachte (insbesondere an der Lagergeraden angreifende) Kraft auf die Schwenkachse kann dann gleichmäßig in die Laufräder eingebracht werden, insbesondere bei gegengleichen axialen Verschiebestellungen der Laufräder auf ihren Drehachsen. Die Ausführungsform hat überdies einen vereinfachten Gesamtaufbau des Rollenbocks; insbesondere können einige der Bestandteile, zum Beispiel die Lagerachselemente, in identischer Form verwendet werden.

Bei einer anderen Weiterbildung der obigen Ausführungsform schließen die erste und die zweite Drehachse einen Winkel zwischen 135° und 45°, bevorzugt einen Winkel zwischen 120° und 60°, und ganz besonders bevorzugt einen Winkel von ca. 90°, ein, gesehen aus einer Richtung parallel zu einer Lagergeraden, die die erste und zweite Drehachse schneidet, und die zur ersten und zweiten Drehachse senkrecht verläuft. Die angegebenen Winkelbereiche gestatten eine hohe Effizienz der Lasteintragsseite, als auch der Begrenzungsseiten, in der Umsetzung und Begrenzung von axialen Verschiebewegen der Laufräder. Bei einem 90°-Winkel kann insbesondere bei flach ausgebildeten, zueinander rechtwinkligen Lasteintrags- und Begrenzungsseiten eine Gleichverteilung des Lasteintrags an jedem Laufrad eingerichtet werden. In der Praxis wird eine im Querschnitt gesehen X-förmige Anordnung der Drehachsen realisiert, wobei die Laufräder typischerweise alle nach unten oder alle nach oben weisen.

Besonders bevorzugt ist eine Ausführungsform, bei der die erste und zweite Drehachse bezüglich einer zweiten Hilfsebene gegengleich geneigt sind, wobei die zweite Hilfsebene eine Lagergerade, die die erste Drehachse und die zweite Drehachse schneidet und zur ersten Drehachse und zur zweiten Drehachse senkrecht verläuft, enthält, und dass der Rollenbock so ausgerichtet ist, dass die zweite Hilfsebene vertikal orientiert ist. Bei einem vertikalen Lasteintrag kann dann der Rollenbock eine symmetrische Lastverteilung erfahren, insbesondere mit gegengleichen axialen Verschiebewegen der Laufräder.

Bevorzugt ist auch eine Ausführungsform, bei der alle Laufräder den gleichen Außendurchmesser aufweisen. Dies vereinfacht den Aufbau des Rollenbocks und das Zusammenwirken mit der Laufschiene. Bei einer einheitlichen Radgröße ist zudem die Instandhaltung des Rollenbocks vereinfacht.

Bei einer weiteren, bevorzugten Ausführungsform des Führungssystems, sind die Laufräder am Außenrand zur Radober- und Radunterseite hin jeweils abgeflacht ausgebildet. Dies ermöglicht einen großflächigen Kontakt zwischen einem abgeflachten Bereich des Laufrads und der Lasteintragsseite und der Begrenzungsseite der Laufschiene. Dadurch kann die Materialbelastung im Betrieb verringert werden. Die Radober- und Radunterseite (Radaußenseiten) bezeichnen die beiden Seiten des Laufrades bezüglich der Laufradebene, durch die der Außenumfang des Laufrades verläuft

### Ausführungsformen zu Verankerungsgruppen

Eine Ausführungsform des erfindungsgemäßen Führungssystems sieht vor, dass das Führungssystem mit einer Verankerungsgruppe, umfassend den Rollenbock und einen Ankerkopf, ausgebildet ist,
wobei der Ankerkopf Verankerungsmittel zur Befestigung des Ankerkopfes an einer Bauwerksfläche, insbesondere an einer überhängenden Bauwerksfläche, aufweist, und wobei der Ankerkopf ein Gegenlager für die Befestigungsmittel des Rollenbocks aufweist. Mit der Verankerungsgruppe kann eine indirekte Befestigung eines Rollenbocks an einer Bauwerksfläche realisiert werden. Bei der Verankerungsgruppe, die für die Einrichtung von Rollenstrecken an Bauwerksflächen eingesetzt wird, ist die unmittelbare Befestigungsfunktion an der Bauwerksfläche im vom Rollenbock separierbaren Ankerkopf eingerichtet. Dies vereinfacht in der Regel die Befestigung der Verankerungsgruppe an der Bauwerksfläche, da der relativ sperrige Grundkörper des Rollenbocks bei der in der Regel Überkopf-Verankerung noch nicht gehandhabt zu werden braucht. Die gegenseitige Befestigung von Ankerkopf und Rollenbock über das Gegenlager kann starr oder bevorzugt beweglich (etwa schwingend), und insbesondere hängend erfolgen. Die Verankerung des Ankerkopfes an bzw. in der Bauwerksfläche kann mit herkömmlichen Montageankern erfolgen, oder auch durch Schraubgewinde, die mit Spreizdübeln zusammenwirken.

Bei einer bevorzugten Weiterbildung dieser Ausführungsform weisen die Befestigungsmittel des Rollenbocks Fortsätze zum Einkippen in das Gegenlager und zum Auskippen aus dem Gegenlager auf, wobei am Ankerkopf Führungen für die Fortsätze ausgebildet sind. Dies ermöglicht es, die Rollenböcke auf einfache Weise in die entsprechenden Ankerköpfe einzuhängen, nach Gebrauch auszuhängen und wieder zu verwenden. Die einfache Handhabung unterstützt einen schnellen und effektiven Arbeitsablauf beim Aufbau und Abbau einer Rollenstrecke, insbesondere so, dass der Aufbau und Abbau während des Versetzens einer Montagebühne zu einem nächsten zu betonierenden Abschnitt einer Gesimskappe erfolgen kann. Die am Ankerkopf ausgebildeten Führungen leiten die Fortsätze beim Ein- und Auskippen des Rollenbocks. Bevorzugt sind die Führungen auch so ausgebildet, dass die Fortsätze während des Ein- und Auskippens nicht aus der Führung herausfallen können, und die Forstsätze im Gegenlager sicher gehalten werden.

Bei einer weiteren, bevorzugten Weiterbildung ist im eingekippten Zustand des Rollenbocks in den Ankerkopf der Rollenbock um eine Schwenkachse drehbar gelagert, insbesondere wobei die Schwenkachse parallel zu einer Lagergeraden des Rollenbocks verläuft, die die Drehachsen der Laufräder schneidet und zu den Drehachsen der Laufräder senkrecht verläuft. Die Schwenkachse ermöglicht eine Entkopplung der Ausrichtung des Rollenbocks von der Neigung der Bauwerksfläche, an der der Ankerkopf befestigt ist. Weiterhin kann sich der hängende Rollenbock bedingt durch die Schwerkraft automatisch in der Vertikalen ausrichten. Die Schwenkachse sollte möglichst nahe an den Verankerungsmitteln bzw. der Bauwerksfläche, an der die Verankerungsmittel befestigt werden, angeordnet sein; dadurch wird die Verankerungsgruppe, und insbesondere der Ankerkopf, auch bei einer eventuellen Schräglage der Bauwerksfläche weniger durch Momente belastet.

### Ausführungsformen betreffend die Führungssysteme

Bei einer bevorzugten Ausführungsform sind die Lasteintragskante und die Begrenzungskante für jeweils ein Laufrad durch ein Winkelprofil, insbesondere ein rechtwinklig ausgebildetes Profil, ausgebildet. Wenn diese Winkelprofile auf einer Seite durch geeignete Mittel wie zum Beispiel Stahlplatten miteinander derart verschweißt sind, dass sie die erwünschte Schienensollbreite ergeben, ist mit einfachen Mitteln eine Laufschiene oder ein Laufschienenabschnitt herstellbar.

Bei einer weiteren, bevorzugten Ausführungsform liegen in aufgesetztem Zustand die Laufräder zwischen den Begrenzungskanten. Derartige Ausführungsformen können besonders kompakt ausgeführt werden und können beim Aufbau der Schienenkonstruktion von einfachen Bauelementen, wie gegenüberliegenden U-Profilen, profitieren. Bei einer Schienenkonstruktion, die U-Profile verwendet, können die Grundseiten des U-Profils als Begrenzungskante eingesetzt werden, und der aufgesetzte Zustand der Laufschiene entspricht dann einem eingeführten Zustand des Rollenbocks in den Raum zwischen den U-Profilen. Insbesondere können auch herkömmliche Halfenschienen eingesetzt werden. Bei dieser Ausführungsform hängen die Laufräder an den Drehachsen bzw. Lagerachselementen typischerweise nach unten herab.

Bei einer alternativen Ausführungsformen liegen in aufgesetztem Zustand die Begrenzungskanten zwischen den Laufrädern. Bei dieser Weiterbildung sind die Laufräder an den Drehachsen bzw. den Lagerachselemente typischerweise nach oben ausgerichtet, was je nach Anwendungsfall zu einer besseren Ausnutzung des Bauraums beitragen kann. Eine mögliche Realisierung einer derartigen Ausführungsform kann durch gegenüberliegende C-Profile erreicht werden, die starr miteinander verbunden sind.

Bei einer weiteren, bevorzugten Ausführungsform des erfindungsgemäßen Führungssystems entspricht eine Sollbreite der Laufschiene, insbesondere eine Sollbeabstandung der Begrenzungskanten, in aufgesetztem Zustand mit an den Anlagekanten anliegenden Laufrädern einer mittleren axialen Verschiebestellung der Laufräder. Unter einer mittleren axialen Verschiebestellung eines Laufrades wird hierbei eine Verschiebestellung verstanden, aus der in beide axiale Richtungen noch axiales Spiel für das Laufrad besteht. Die axiale Verschiebestellung eines Laufrades, welche sich bei aufgesetzter Laufschiene in der Sollbreite unter Last ergibt, wird als Nennstellung bezeichnet. Gemäß der obigen Ausführungsform ist für alle Laufräder die Nennstellung eine mittlere axiale Verschiebestellung, so dass bei einer Laufschiene in Sollbreite für alle Laufräder noch eine Verschieblichkeit in beide axiale Verschieberichtungen verbleibt. Dadurch können Schwankungen (infolge Fertigungstoleranzen, Beschädigungen und dergleichen) der Laufschiene entlang ihrer Längserstreckung gegenüber der Sollbreite in beide Richtungen ausgeglichen werden. Bevorzugt beträgt in der Nennstellung der Laufräder das axiale Spiel in beide axiale Richtungen noch wenigstens 2,5 mm, bevorzugt wenigstens 5 mm. Man beachte, dass die ausgleichbaren Schwankungen der Schienenbreite auch von der Neigung der Drehachsen im Rollenbock abhängen. Bevorzugt sind die maximalen Verschiebewege der Laufräder ausreichend groß, so dass auch bei den zu erwartenden Schwankungen der Laufschienenbreite die axiale Verschieblichkeit nicht erschöpft wird, und jederzeit bei eingeführtem Rollenbock die Laufräder in axialer Richtung noch zu beiden Seiten bewegt werden können und nicht etwa an einer Verschiebewegsbegrenzung (Anschlag) anliegen.

Bevorzugt ist auch eine Ausführungsform, bei der die Laufschiene durch zwei sich gegenüberliegende, einseitig starr miteinander verbundene C-Profile oder U-Profile ausgebildet ist. Der aufgesetzte Zustand der Laufschiene entspricht dann einem eingeführten Zustand des Rollenbocks in den Raum zwischen den C-Profilen bzw. U-Profilen. Die einseitig starre Verbindung der C-Profile bzw. U-Profile kann zum Beispiel durch angeschweißte Verbindungsplatten realisiert sein, die in regelmäßigen Abständen in Schienenlängsrichtung angebracht sind. Durch diejenige Seite, die nicht von der einseitig starren Verbindung eingenommen wird, kann der Grundkörper des Rollenbocks geführt werden.

Bevorzugt ist darüber hinaus auch eine Ausführungsform, bei der die Haltevorrichtung einen quer zur Längsrichtung der Laufschiene verlaufenden, seitlichen Ausleger zur Sicherung der Haltevorrichtung gegen ein Verkippen um eine Kippachse parallel zur Längsrichtung der Laufschiene aufweist, insbesondere wobei am Ende des Auslegers eine Laufrolle angeordnet ist. Dies ist besonders von Vorteil, wenn die Haltevorrichtung einseitig durch ein Gewicht belastet wird, durch das ein Moment um die Kippachse entsteht; eine solches Moment entsteht regelmäßig durch eine seitlich angeordnete, an der Haltevorrichtung befestigte Montagebühne. Dieses Moment kann durch eine Stützkraft, mit der sich der Ausleger bzw. die Laufrolle am Ende des Auslegers gegenüber einer Bauwerksfläche abstützt, ausgeglichen werden. Die Laufrolle ermöglicht ein Abrollen des Auslegers beim Versetzten der Haltevorrichtung bzw. Montagebühne in Längsrichtung der Laufschiene.

### Weitere Aspekte der Erfindung

In den Rahmen der vorliegenden Erfindung fällt weiterhin eine Montagegruppe, umfassend ein erfindungsgemäßes Führungssystem mit mehreren Rollenböcken und Haltevorrichtungen, und eine Montagebühne, die an den Haltevorrichtungen befestigbar ist. Im Betrieb auf der Baustelle ist die Montagebühne an den Haltevorrichtungen befestigt. Durch die erfindungsgemäße Montagegruppe können Montagearbeiten, insbesondere zum Aufbau einer Betonschalung, an normalerweise nur schwer zugänglichen Stellen durchgeführt werden, wie dies zum Beispiel bei überhängenden Bauwerksflächen oder auskragenden Bauwerksstrukturen der Fall ist.

Bei einer bevorzugten Ausführungsform der erfindungsgemäßen Montagegruppe ist auf der Montagebühne eine Betonschalung aufgebaut, insbesondere eine Betonschalung für eine Gesimskappe einer Brücke. Für den schnellen Aufbau und die schnelle Versetzung von Betonschalungen ist die vorliegende Erfindung besonders geeignet. Diese Ausführungsform ermöglicht insbesondere das Betonieren von Gesimskappen an den Fahrbahnrändern von Hochbrücken. Die erfindungsgemäßen Rollenböcke sind dabei an der Unterseite der auskragenden Fahrbahnplatte verankert und die Laufschiene oder die Laufschienenabschnitte werden beim Betonieren der Gesimskappenabschnitte zusammen mit den Haltevorrichtungen und der Montagebühne entlang des teilgefertigten Fahrbahnrandes (des Randes der Kragplatte) verfahren.

In den Rahmen der vorliegenden Erfindung fällt auch ein Bauwerk, an dem eine erfindungsgemäße Montagegruppe befestigt ist, insbesondere mit einem erfindungsgemäßen Führungssystem mit Verankerungsbaugruppen, wobei die Rollenböcke in den Verankerungsgruppen integriert sind. Am Bauwerk können dann von der Montagebühne aus leicht Arbeiten, insbesondere Schal- und Betonierarbeiten, durchgeführt werden.

Bei einer bevorzugten Ausführungsform des erfindungsgemäßen Bauwerks sind die Rollenböcke an einer überhängenden Bauwerksfläche, insbesondere der Unterseite einer Kragplatte einer teilgefertigten Betonbrücke, direkt oder indirekt befestigt. Die an der überhängenden Bauwerksfläche befestigten Rollenböcke können zeitsparend während des Versetzens der Montagebühne auf- und abgebaut werden.

Weitere Vorteile der Erfindung ergeben sich aus der Beschreibung und der Zeichnung. Ebenso können die vorstehend genannten und die noch weiter ausgeführten Merkmale erfindungsgemäß jeweils einzeln für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Die Erfindung ist in den Zeichnungen dargestellt und wird anhand von Ausführungsbeispielen näher erläutert. Es zeigt:
Fig. 1 einen Querschnitt durch eine erste Bauform eines Rollenbocks für die Erfindung, auf den eine Laufschiene aufgesetzt ist;
Fig. 2 einen Querschnitt durch eine zweite Bauform eines Rollenbocks für die Erfindung, auf den eine Laufschiene aufgesetzt ist (Haltevorrichtung nicht dargestellt);
Fig. 3 einen Querschnitt durch eine montierte Verankerungsbaugruppe für die Erfindung, mit einem Ankerkopf, in den ein Rollenbock gemäß Figur 1 eingekippt ist;
Fig. 4 einen Querschnitt durch einen starr an einer Bauwerksfläche montierten Rollenbock für die Erfindung;
Fig. 5 eine perspektivische Ansicht der Verankerungsgruppe von Figur 3;
Fig. 6 eine perspektivische Ansicht eines erfindungsgemäßen Führungssystems umfassend einen Rollenbock gemäß Figur 1;
Fig. 7 einen Querschnitt durch eine erfindungsgemäße, an einer Kragplatte befestigte Montagegruppe; und
Fig. 8 eine Seitenansicht einer Gesimskappenschalbahn mit einer erfindungsgemäßen Montagegruppe.

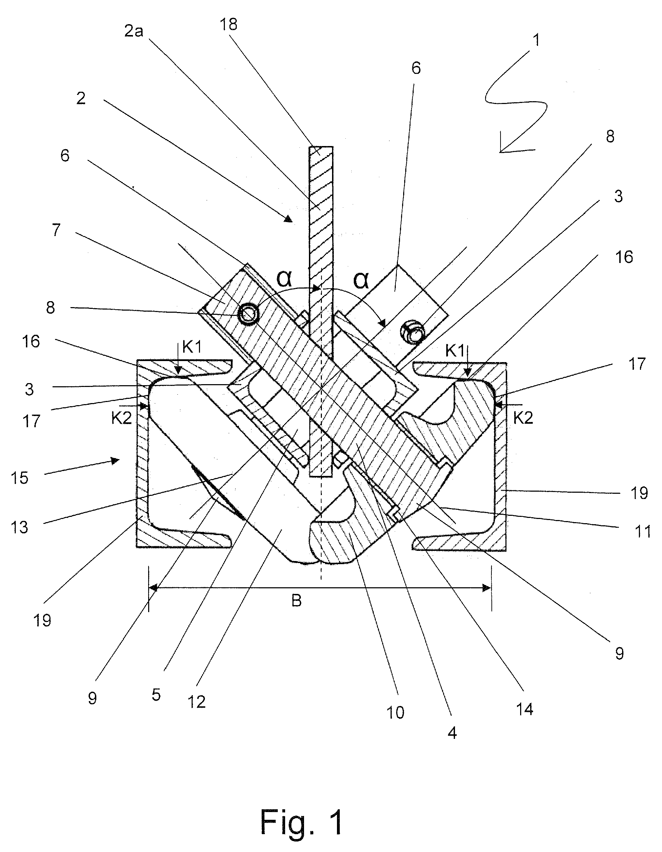

Die Figur 1 zeigt einen Querschnitt durch eine erste Bauform eines Rollenbocks 1 für die Erfindung, senkrecht zu einer Laufrichtung des Rollenbocks 1. Der Rollenbock 1 umfasst einen Grundkörper 2, der im Wesentlichen aus einer Grundplatte 2a und daran angeschweißte gleichschenklige Winkelbleche 3 besteht. Die Winkelbleche 3 des Grundkörpers 2 sowie die Grundplatte 2a weisen Bohrungen auf, durch die kreiszylindrische Lagerachselemente 4,5 geführt sind. Um ein Hindurchfallen der Lagerachselemente 4,5 durch die Bohrungen in den Winkelblechen 3 und der Grundplatte 2a zu verhindern, sind Hülsen 6 an den oberen Enden 7 der Lagerachselemente 4,5 vorgesehen, wobei zur Sicherung Querbolzen 8 durch die Hülsen 6 und die Lagerachselemente 4,5 verlaufen.

An dem unteren Ende 9 des ersten Lagerachselements 4 ist ein erstes Laufrad 10 vorgesehen, das auf dem Lagerachselement 4 um eine erste Drehachse 11 drehbar gelagert ist, wobei die erste Drehachse 11 koaxial zum Lagerachselement 4 verläuft. An dem unteren Ende 9 des zweiten Lagerachselements 5 ist ein zweites Laufrad 12 vorgesehen, das auf dem Lagerachselement 5 um eine zweite Drehachse 13 drehbar gelagert ist, wobei die zweite Drehachse 13 koaxial zum Lagerachselement 5 verläuft.

Die Laufräder 10,12 sind bis zu einem gewissen Grad axial auf den Lagerachselementen 4,5 verschieblich gelagert. Ihre axiale Verschieblichkeit wird in dieser Ausführungsform am unteren Ende 9 der Lagerachselemente 4,5 durch Anschläge 14 begrenzt. In die Richtung der oberen Enden 7 der Lagerachselemente 4,5 ist die axiale Verschieblichkeit der Laufräder 10,12 durch die Winkelbleche 3 begrenzt.

Im Querschnitt der Figur 1 sind zwei Laufräder 10,12 erkennbar, wobei das erste Laufrad 10 in der Abbildung geschnitten wird. Das zweite Laufrad 12 liegt dagegen hinter der Querschnittsebene. Ein drittes Laufrad liegt hinter dem ersten Laufrad 10 und wird in der Abbildung verdeckt. Die Drehachsen 11,13 der beiden Laufräder 10,12 sind bezüglich der Grundplatte 2a des Grundkörpers 2 jeweils in einem Winkel α von 45° geneigt, wodurch sich im Querschnitt eine X-Stellung der Lagerachselemente 4,5 ergibt. Der gesamte Winkel zwischen den Drehachsen 11,13 beträgt somit 90°.

Auf die Laufräder 10,12 des Rollenbocks 1 ist eine Laufschiene 15 aufgesetzt, die in der Ausführungsform der Figur 1 im Wesentlichen aus gegenüberliegenden und starr miteinander verbundenen U-Profilen 19 aufgebaut ist. Die starre Verbindung der beiden U-Profile 19 ist dabei in der Figur 1 nicht dargestellt. In dem Bereich, in dem die Laufschiene 15 auf die Laufräder 10,12 aufgesetzt ist, weist die Laufschiene 15 durch die U-Form der Profile 19 näherungsweise horizontale Anlage- beziehungsweise Lasteintragskanten 16 und näherungsweise vertikale Anlage- beziehungsweise Begrenzungskanten 17 für die Laufräder 10,12 auf. Durch die Lasteintrags- und Begrenzungskanten 16,17 wird die Laufschiene 15 entlang den Laufrädern 10,12 des Rollenbocks 1 geführt. Die Laufräder 10,12 weisen eine Außenkontur entsprechend der Innenkontur der Laufschiene im Bereich der Anlagekanten 16, 17 auf, und sind für eine gute Anlage an den Anlagekanten 16,17 zur Ober- und Unterseite der Laufräder 10,12 hin abgeflacht.

Die Begrenzungskanten 17 limitieren dabei, von beiden Seiten der Laufschiene 15 her, die axiale Verschieblichkeit der Laufräder 10,12 auf den jeweiligen Lagerachselementen 4,5, wobei der Abstand der Begrenzungskanten 17 eine Schienenbreite B definiert. Die Lasteintragskanten 16 dienen dem Einbringen von Lasten, wie beispielsweise dem Gewicht einer Montagebühne. Zum einen sind die Laufräder 10,12 bei aufgesetzter Laufschiene 15, und einem entsprechenden, hier näherungsweise vertikalen Krafteintrag K1 über die Lasteintragskanten 16, bestrebt, sich in axialer Richtung auf die Anschläge 14 hin zu bewegen. Zum anderen bewirkt dieses Bestreben das Anliegen der Laufräder 10,12 an den seitlichen Begrenzungskanten 17, wodurch die Laufräder 10,12 als Reaktion einen Krafteintrag K2 in hier näherungsweise horizontaler Richtung erfahren, der zum Rollenbock hin gerichtet ist. Der Krafteintrag K2 von den Begrenzungskanten 17 her bewirkt für sich genommen eine axiale Bewegung der Laufräder 10,12 in Richtung der Winkelbleche 3 und kompensiert somit das ursprüngliche Bestreben der Laufräder 10,12, sich in Richtung der Anschläge 14 zu bewegen. Sind die Krafteinträge K1 und K2 auf die Laufräder 10,12 im Gleichgewicht und entspricht der aktuelle Abstand B der Begrenzungskanten 17 einer Schienensollbreite SB, so rollen die Laufräder in ihrer so genannten Nennstellung auf den Lagerachselementen 4,5.

Treten beispielsweise durch Fertigungstoleranzen bei der Laufschienenproduktion lokal von der Schiensollbreite SB abweichende Abstände B der Begrenzungskanten 17 auf, sind die Laufräder 10,12 in der Lage, von der in der Figur 1 dargestellten Nennstellung abzuweichen. Weist die Laufschiene 15 beim Verfahren in Längsrichtung eine seitliche Aufweitung auf (B>SB), tritt kurzzeitig ein Ungleichgewicht der Krafteinträge K1, K2 auf: Die näherungsweise horizontalen Krafteinträge K2 auf die Laufräder 10,12 sind kurzzeitig verringert, wodurch die Laufräder 10,12 axial in Richtung der Anschläge 14 ausweichen. Dadurch erfolgt eine geringe Absenkung der Laufschiene 15 gegenüber dem Rollenbock 1. Bei einer seitlichen Verjüngung (B<SB) der Laufschiene 15 kehren sich die Wirkungen um, und eine der Verjüngung entsprechende Anhebung der Laufschiene 15 gegenüber dem Rollenbock tritt ein. In beiden Fällen ist durch die ständige Anlage der Laufräder 10,12 an den Lasteintrags- beziehungsweise Begrenzungskanten 16,17 ein spielfreies Verfahren der Laufschiene 15 über den Rollenbock 1 möglich.

Unter Last liegt der Rollenbock 1 also mit seinen Laufrädern 10,12 mit beiden Außenseiten an den Begrenzungskanten 17 der Laufschiene 15 an, so dass in (hier) horizontaler Richtung die Laufschiene 15 ohne Spiel den Rollenbock 1 umgreift. Die Laufschiene 15 kann (bei in horizontaler Richtung festem Rollenbock 1) somit auch bei einer äußeren Krafteinwirkung in seitlicher (horizontaler) Richtung nicht in die horizontale Richtung verschoben werden.

Man beachte, dass die Krafteintragsrichtungen K1, K2 bezüglich der Drehachsen 11, 13 geneigt ausgerichtet sind, und hier zu den Drehachsen jeweils einen Winkel von ca. 45° einschließen.

Der Grundkörper 2 des Rollenbocks 1 weist an seinem oberen Ende 18 Befestigungsmittel zur direkten oder indirekten Befestigung an einer Bauwerksfläche auf. Diese Befestigungsmittel sind in der Figur 1 nicht dargestellt.

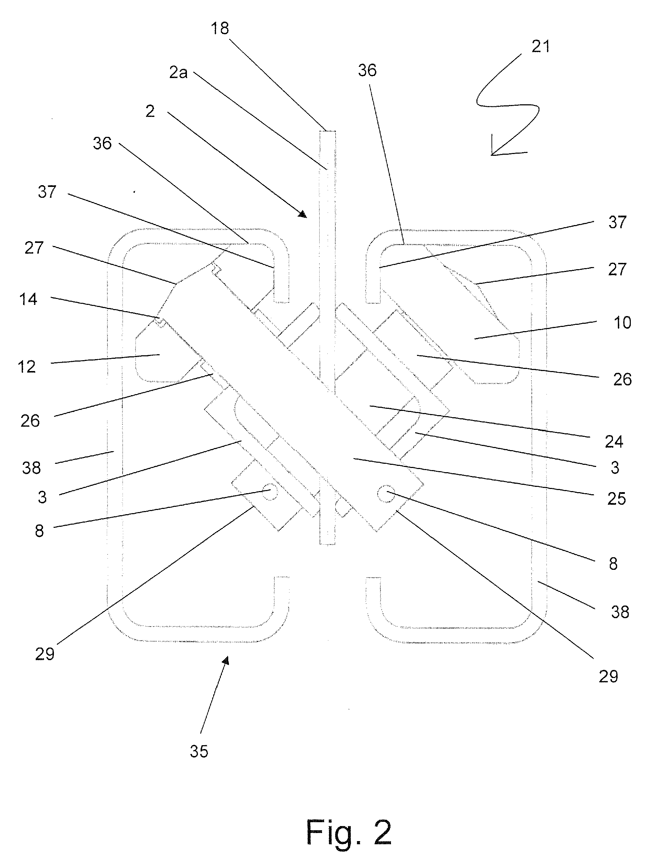

Die **Figur 2** zeigt einen Querschnitt durch eine zweite Bauform eines Rollenbocks 21 für die Erfindung. Im Unterschied zu der Figur 1 weisen in dieser Bauform die auf den Lagerachselementen 24,25 sitzenden Laufräder 10,12 nach oben und nicht nach unten. Der Grundkörper 2 weist den gleichen Aufbau auf, bestehend aus der Grundplatte 2a und den daran angeschweißten Winkelprofilen 3. Am oberen Ende des Grundkörpers 18 sind ebenfalls nicht dargestellte Befestigungsmittel zur Befestigung an beispielsweise einer überhängenden Bauwerksfläche vorgesehen.

Zwischen den Laufrädern 10,12 und den Winkelprofilen 3 sind starr mit den Lagerachselementen 24,25 verbundene hülsenförmige Aufsätze 26 vorgesehen. Diese Aufsätze 26 dienen zum einen der Lagerung der Lagerachselemente 24,25 in den Bohrungen der Winkelprofile 3 und des Grundkörpers 2, wobei die Aufsätze 26 insbesondere das Hindurchrutschen der Lagerachselemente 24,25 durch die Bohrungen verhindern. Zum anderen stellen die Aufsätze 26 an den den Laufrädern 10,12 zugewandten Seiten eine Begrenzung für die axiale Verschieblichkeit der Laufräder 10,12 dar. Ebenso stellen die an den oberen Enden 27 der Lagerachselemente 24,25 ausgebildeten Anschläge 14 eine Begrenzung für die axiale Verschieblichkeit der Laufräder 10,12 dar. An den unteren Enden 29 der Lagerachselemente 24,25 sind ebenfalls Querbolzen 8 zu Sicherungszwecken in die Lagerachselemente 24,25 eingebracht.

Im Unterschied zu der Figur 1 ist in der Bauform der Figur 2 eine anders ausgebildete Laufschiene 35 auf die nach oben weisenden Laufräder 10,12 aufgesetzt. Die Laufschiene 35 ist aus zwei gegenüberliegenden und starr miteinander verbundenen C-Profilen 38 aufgebaut. Die starre Verbindung der beiden C-Profile 38 ist dabei in der Figur 2 nicht dargestellt. In dem Bereich, in dem die Laufschiene 35 auf die Laufräder 10,12 aufgesetzt ist, weist die Laufschiene 35 durch die C-Form der Profile 38 horizontale Anlagebeziehungsweise Lasteintragskanten 36 und zwischen den Laufrädern 10,12 angeordnete, vertikale Anlage- beziehungsweise Begrenzungskanten 37 für die Laufräder 10,12 auf. Durch die Lasteintrags- und Begrenzungskanten 36,37 wird die Laufschiene 35 entlang den Laufrädern 10,12 des Rollenbocks 21 geführt.

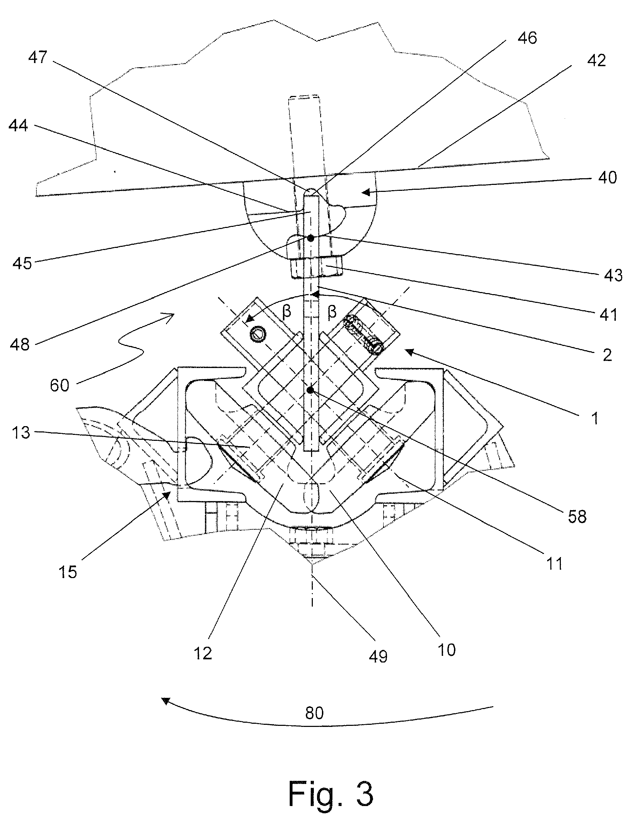

Die **Figur 3** zeigt einen Querschnitt durch einen in einen Ankerkopf 40 eingekippten Rollenbock 1. Der Ankerkopf 40 ist dabei mittels eines Verankerungsmittels, das hier als Befestigungsbolzens 41 ausgebildet ist, fest an der nach unten gerichteten Bauwerksfläche 42 einer auskragenden Wandstruktur verankert. Der Ankerkopf 40 weist als Gegenlager für die Befestigungsmittel des Rollenbocks 1 eine Pfanne 43 auf, die über seitliche Führungen 44 für die Befestigungsmittel des Rollenbocks 1 zugänglich ist. Die Befestigungsmittel des Rollenbocks 1 sind ihrerseits als hintergreifende Fortsätze 45 am Grundkörper 2 des Rollenbocks 1 ausgebildet.

Beim Einkippen des Rollenbocks 1 in den Ankerkopf 40 werden die hintergreifenden Fortsätze 45 in einer nicht dargestellten Schräglage des Rollenbocks 1 zunächst über die Führungen 44 des Ankerkopfs 40 zur Pfanne 43 geführt und dann durch ein Schwenken des gesamten Rollenbocks 1 um eine Schwenkachse 48 in die dargestellte, eingekippte Lage gebracht. Die Schwenkachse 48 verläuft in der eingekippten Lage durch einen Kontaktbereich, der durch die Auflage der Fortsätze 45 auf Teile der Pfanne 43 bestimmt ist. Im Falle, dass der Rollenbock 1 in eine Richtung 80 geschwenkt wird, kippt der Rollenbock 1 unmittelbar um die im Kontaktbereich liegende Schwenkachse 48. Bei einer Verschwenkung des Rollenbocks 1 in einer der Richtung 80 entgegengesetzten Richtung kann es bei Anlage der Fortsätze 45 an ihrem oberen Ende 46 an einer Ausnehmung 47 des Ankerkopfs 40 zu einer Verschiebung der Schwenkachse 48 weg vom Kontaktbereich kommen.

Ein Herausfallen des Rollenbocks 1 aus dem Ankerkopf 40 ist zum einen aufgrund der konvexen Form der Pfanne 43 und zum anderen aufgrund der Anlage des Fortsatzes 45 am Ankerkopf 40 nahezu unmöglich. Solange die Fortsätze 45 nicht von der Pfanne 43 nach oben abgehoben werden, was unter Last praktisch ausgeschlossen ist, verhindern die Pfanne 43 und die Führungen 44 ein Auskippen des Rollenbocks 1 aus dem Ankerkopf 40.

Die Schwenkachse 48 und eine Lagergerade 58 verlaufen parallel zueinander und sind in einer ersten Hilfsebene 49 enthalten, wobei die Lagergerade 58 die erste Drehachse 11 und die zweite Drehachse 13 schneidet und jeweils senkrecht auf den Drehachsen 11,13 steht. Die Drehachsen 11,13 sind dabei jeweils gegenüber der ersten Hilfsebene 49 um β = 45° geneigt.

Der Rollenbock 1 und der Ankerkopf 40 bilden zusammen eine Verankerungsgruppe 60 für die Erfindung.

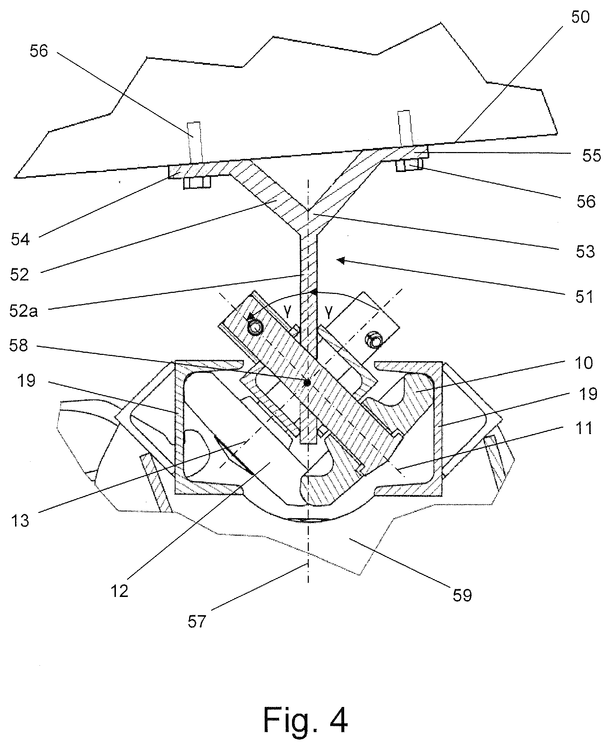

Die **Figur 4** zeigt einen Querschnitt durch einen starr an einer Bauwerksfläche 50 beziehungsweise der zugehörigen Wandstruktur montierten, direkt befestigten Rollenbock 51. Der Grundkörper 52 des Rollenbocks 51 weist hierfür an seinem oberen Ende 53 eine starre, V-förmige Verlängerung auf, die als Befestigungsmittel an ihren Enden Flansche 54,55 aufweist. Durch Bohrungen in den Flanschen 54,55 ist der Grundkörper 52 über Schraubenbolzen 56 an der Bauwerksfläche 50 befestigbar.

Der Grundkörper 52 ist dabei so ausgerichtet, dass eine zweite Hilfsebene 57, die hier mittig in der Grundplatte 52a des Grundkörpers 52 verläuft und eine Lagergerade 58 enthält, vertikal ausgerichtet ist. Dabei ist die Lagergerade 58 diejenige Gerade, die jeweils zu der ersten und der zweiten Drehachse 11,13 des ersten und des zweiten Laufrads 10,12 senkrecht steht und die erste und die zweite Drehachse 11,13 schneidet. Die erste und die zweite Drehachse 11,13 sind dabei bezüglich der zweiten Hilfsebene 57 symmetrisch um einen Winkel γ=45° geneigt angeordnet.

Des Weiteren ist in der Figur 4 eine starre Verbindung 59 der beiden U-Profile 19 der Laufschiene 15 dargestellt. Eine derartige Verbindung 59 kann aus einfachen, mit den U-Profilen 19 verschweißten Stahlplatten oder dergleichen hergestellt sein. Um einen ungehinderten Lauf der Laufräder 10,12 zu ermöglichen, ist es unter Umständen notwendig, die Verbindung 59 mit einer gekrümmten Aussparung zu versehen.

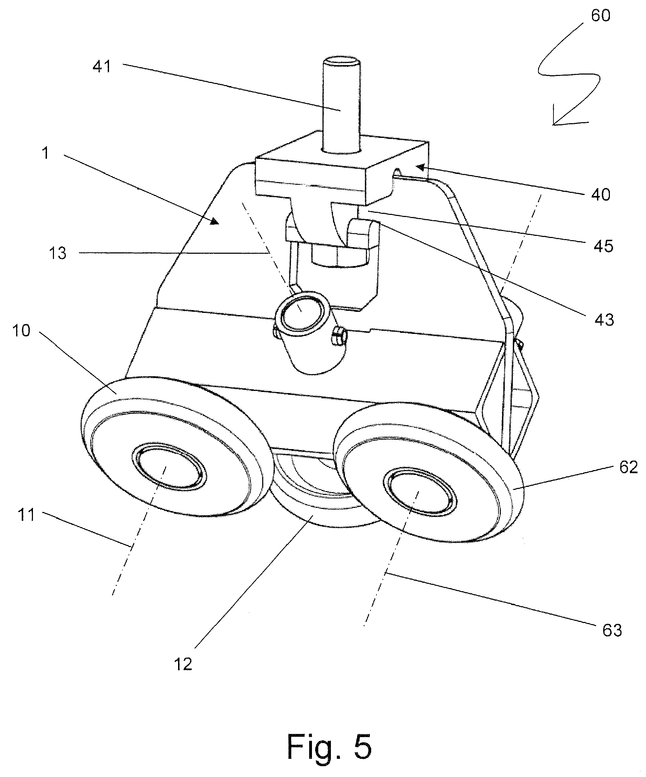

In der **Figur 5** ist eine perspektivische Ansicht einer Verankerungsgruppe 60 für die Erfindung dargestellt, wobei die Verankerungsgruppe 60 einen Rollenbock 1 mit drei Laufrädern 10,12,62 und einen Ankerkopf 40 mit einem als Schraubenbolzen 41 ausgebildetes Verankerungsmittel umfasst. Die drei Laufräder 10,12,62 sind dabei hintereinander angeordnet, sodass die Drehachsen 11,63 der beiden äußeren Laufräder 10,62 parallel zueinander ausgerichtet sind. Der Rollenbock 1 ist in der im Ankerkopf 40 eingekippten Lage dargestellt, wodurch in der perspektivischen Ansicht das Hintergreifen eines der beiden Fortsätze 45 bezüglich der Pfanne 43 des Gegenlagers am Ankerkopf 40 ersichtlich ist.

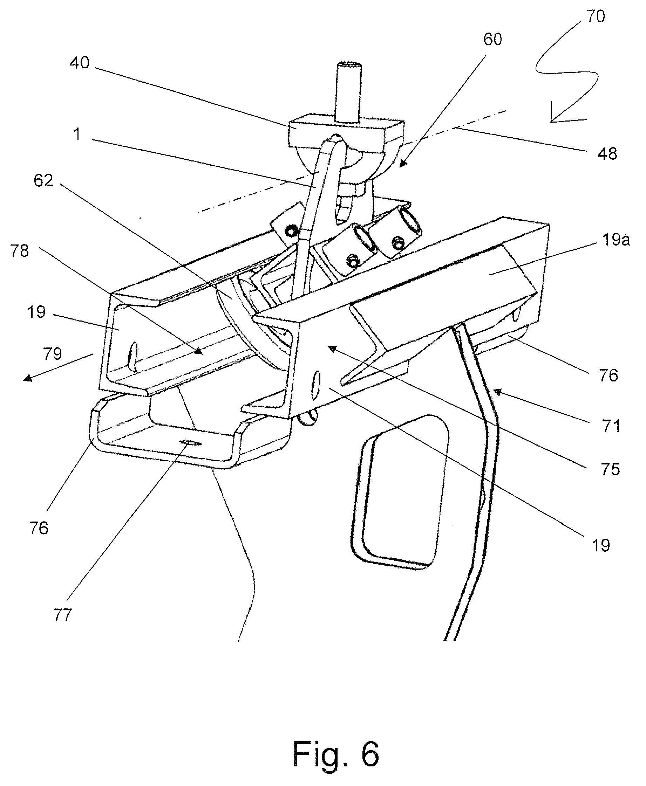

In der **Figur 6** ist eine perspektivische Ansicht eines erfindungsgemäßen Führungssystems 70 dargestellt, wobei das Führungssystem 70 einen dreirädrigen Rollenbock 1 als Teil einer Verankerungsgruppe 60 und eine Haltevorrichtung 71 umfasst. Dabei ist an der Haltevorrichtung 71 unmittelbar ein aus zwei U-Profilen 19 bestehendes Schienensegment 75 einer Laufschiene ausgebildet beziehungsweise angeschweißt.

Zusätzliche an die U-Profile 19 des Schienensegments 75 angeschweißte Winkelprofile 19a verleihen der Haltevorrichtung 71 eine bessere Stabilität. An den Enden des Schienensegments 75 sind U-förmige Verbindungslaschen 76 angebracht, die mittig eine Bohrung 77 aufweisen. Die Verbindungslaschen 76 können zur gelenkigen Verbindung aneinander grenzender Schienensegmente 75 genutzt werden, wofür Bolzen durch die Bohrungen 77 gesteckt werden. Zusätzlich tragen die Verbindungslaschen 76 dazu bei, dass das Schienensegment 75 an seinen offenen Enden möglichst stabil aufgebaut ist und die erforderliche Schienensollbreite aufweist.

Die Figur 6 zeigt darüber hinaus in der perspektivischen Ansicht, wie das Schienensegment 75 über die Laufräder 10,12,62 in eine Führungsrichtung 79 verfahrbar ist. Die Führungsrichtung 79 verläuft parallel bezüglich einer Schwenkachse 48, um die der Rollenbock 1 im Ankerkopf 40 schwenkbar ist.

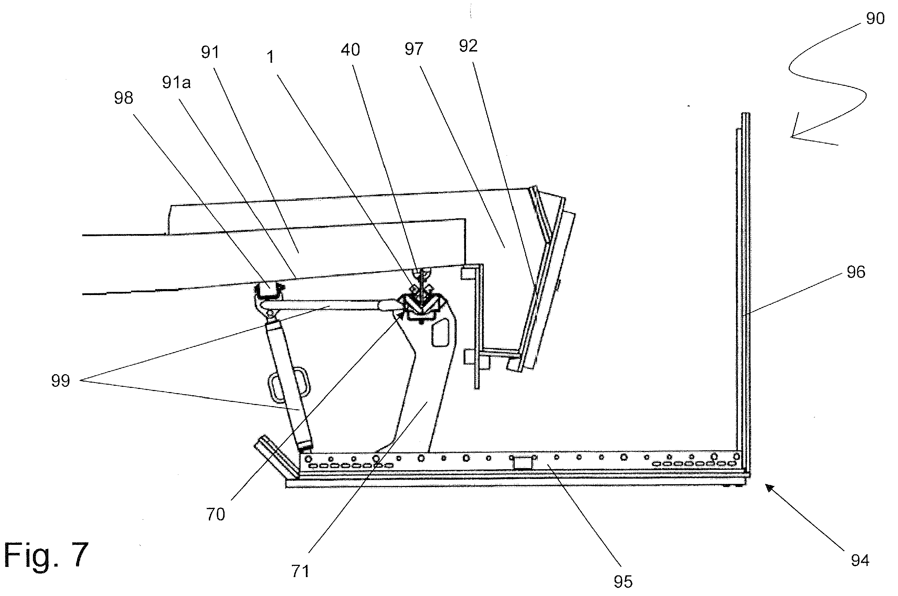

Die **Figur 7** zeigt einen Querschnitt durch eine erfindungsgemäße Montagegruppe 90, die an der Unterseite 91 a einer Kragplatte 91 montiert ist und der Anbringung einer Gesimskappenschalung 92 für eine Brücke dient. Der Querschnitt ist senkrecht zur Längsrichtung der Brücke gewählt. Die Montagegruppe 90 ist aus einem erfindungsgemäßen Führungssystem 70 mit mehreren Rollenböcken 1 und Haltevorrichtungen 71 aufgebaut, wobei eine Montagebühne 94 an den Haltevorrichtungen 71 befestigt ist (In der Querschnittsdarstellung der Fig. 7 ist dabei nur ein Rollenbock 1 und eine Haltevorrichtung 71 zu sehen). Die Montagebühne 94 weist hier eine horizontal verlaufende Grundarbeitsfläche 95 und ein vertikal verlaufendes, seitliches Sicherungsgeländer 96 auf. Die Gesimskappenschalung 92 ist durch nicht dargestellte Aufbauten gegenüber der Grundarbeitsfläche 95 und dem Sicherungsgeländer 96 abgestützt. Die Grundarbeitsfläche 95 verläuft dabei auch unterhalb der Gesimskappenschalung 92.

Das Gewicht des beim Betoniervorgang der Gesimskappe 97 in die Gesimskappenschalung 92 einfließenden Betons und das Gewicht der Montagebühne 94 selbst erzeugen ein Moment, welches die Haltevorrichtung 71 und damit auch die Montagebühne 94 um eine senkrecht zur Zeichenebene verlaufende Kippachse zu kippen versucht. Dieses Moment kann durch die Anlage einer Laufrolle 98 an der Unterseite 91 a der Kragplatte 91 ausgeglichen werden. Die Haltevorrichtung 71 bildet eine Ausleger-Konstruktion 99 aus, in der die Laufrolle 98 gelagert ist. Die Laufrolle 98 weist einen gewissen seitlichen (horizontalen und quer zur Laufrichtung des Führungssystems 70 liegenden) Abstand zum Ankerkopf 40, zum Rollenbock 1, und zur Laufschiene, in der der Rollenbock 1 geführt ist, auf.

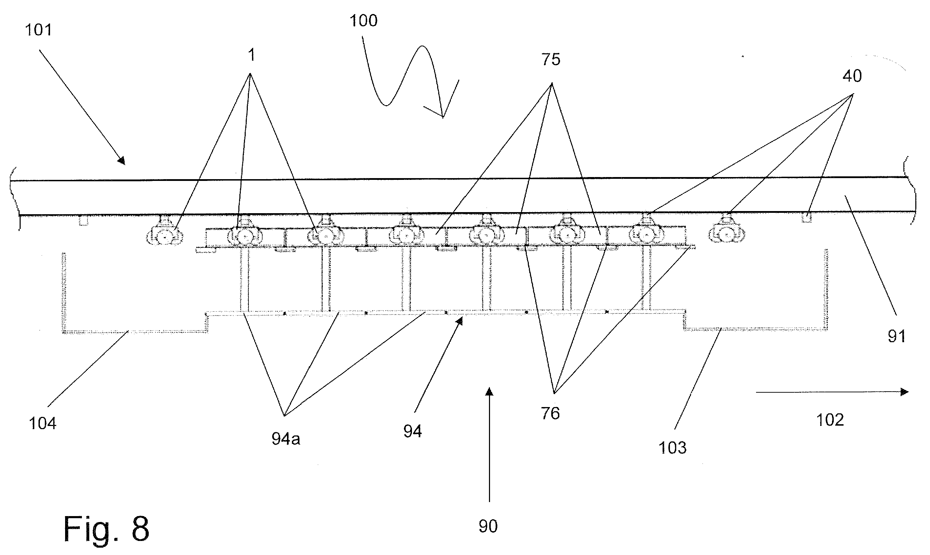

Die **Figur 8** zeigt eine Seitenansicht einer Gesimskappenschalbahn 100, umfassend eine an einer Kragplatte 91 montierte Montagegruppe 90 entsprechend Figur 7. Entlang eines Fahrbahnrands 101, an dem die Gesimskappe betoniert werden soll, ist eine Rollenstrecke aus mehreren hintereinander angeordneten Rollenböcken 1 vorgegeben. Jeder Rollenbock 1 ist über einen Ankerkopf 40 in der Kragplatte 91 verankert. Die einzelnen Montagebühnensegmente 94a der Montagebühne 94 der Montagegruppe 90 sind (zumindest) über die U-förmigen Verbindungslaschen 76 an den Schienensegmenten 75 miteinander verbunden, wobei die Verbindungslaschen 76 derart ausgebildet sind, dass sie ineinander eingreifen können. Um der Route eines gekrümmten Fahrbahnrandes 101 mit der Gesimskappenschalbahn 100 folgen zu können, sind die Schienensegmente 75 über die Verbindungslaschen 76 gelenkig miteinander verbunden. Dies kann zum Beispiel über Gelenkbolzen erfolgen, die in die mittig an den Verbindungslaschen 76 angebrachten Bohrungen eingesetzt werden.

Die Gesimskappenschalbahn 100 kann in eine Fahrtrichtung 102 voranschreiten, indem im Kopfbereich (in Fig. 8 rechts) der Gesimskappenschalbahn 100 zum Beispiel mit Hilfe einer ausladenden Arbeitsbühne 103 Ankerköpfe 40 verankert und Rollenböcke 1 in die Ankerköpfe 40 eingesetzt werden. Am Ende (in Fig. 8 links) der Gesimskappenschalbahn 100 können die durchfahrenen Rollenböcke 1 und deren zugehörige Ankerköpfe 40 dann über eine weitere ausladende Arbeitsbühne 104 wieder entfernt und eingesammelt werden. Dabei können gerade eingesammelte Rollenböcke 1 und Ankerköpfe 40 während eines Versetzens der Montagebühne 94 (Verfahrens der Montagebühne 94 entlang Richtung 102) auch sofort wieder am Kopfbereich erneut montiert werden.

Das Betonieren einer Gesimskappe kann daher vollständig im Rahmen eines einmaligen (abschnittweisen) Verfahrens der Gesimskappenschalbahn entlang der gesamten Brückenlänge erfolgen. Die Brückenlänge braucht insbesondere nicht vorab (etwa zur Montage einer oder mehrerer Laufschienen über die gesamte Länge der Kragplattenunterseite) und auch nicht nach Fertigstellung der Gesimskappe (etwa zum Abmontieren einer oder mehrerer Laufschienen von der gesamten Länge der Kragplattenunterseite) zusätzlich abgearbeitet zu werden. Dadurch wird Arbeitszeit eingespart, und es wird nur wenig Material benötigt (insbesondere nur Rollenböcke für im Wesentlichen die Länge der Gesimskappenschalbahn, und nicht für die gesamte Brückenlänge).

## Patentansprüche

1. Führungssystem (70), umfassend
a) wenigstens einen Rollenbock (1;21;51), insbesondere zur Führung und Befestigung einer mit einer Laufschiene (15;35) versehenen Montagebühne (94) bei der Fertigung eines Betonbauwerks, umfassend mindestens ein erstes Laufrad (10) und ein zweites Laufrad (12), die an einem Grundkörper (2;52) des Rollenbocks (1;21;51) drehbar gelagert sind,
und umfassend Befestigungsmittel zur direkten oder indirekten Befestigung des Rollenbocks (1;21;51) an einer Bauwerksfläche (42;50), insbesondere einer überhängenden Bauwerksfläche (42;50),
wobei eine erste Drehachse (11), um die das erste Laufrad (10) drehbar ist, bezüglich einer zweiten Drehachse (13), um die das zweite Laufrad (12) drehbar ist, nicht parallel ausgerichtet ist,
und wobei das erste Laufrad (10) bezüglich der ersten Drehachse (11) axial verschieblich gelagert ist, und das zweite Laufrad (12) bezüglich der zweiten Drehachse (13) axial verschieblich gelagert ist, und
b) wenigstens eine Haltevorrichtung (71), insbesondere wobei die wenigstens eine Haltevorrichtung (71) zur Befestigung einer Montagebühne (94) ausgebildet ist,
wobei in der Haltevorrichtung (71) eine Laufschiene (15;35) ausgebildet ist, die auf die Laufräder (10,12,62) des mindestens einen Rollenbocks (1;21;51)
aufsetzbar ist,
und wobei die Laufschiene (15;35) Anlagekanten zur Anlage der Laufräder (10,12,62) ausbildet,
insbesondere wobei eine Innenkontur der Laufschiene (15;35) im Bereich der Anlagekanten einer Außenkontur der Laufräder (10,12,62) entspricht,
**dadurch gekennzeichnet,**
**dass** die Laufschiene (15;35) eine erste und eine zweite Lasteintragkante (16;36) ausbildet, die in aufgesetztem Zustand jeweils von der gleichen Seite am ersten und zweiten Laufrad (10,12) anliegen,
**dass** die Laufschiene (15;35) eine erste und eine zweite Begrenzungskante (17;37) ausbildet, die in aufgesetztem Zustand jeweils von gegenüberliegenden Seiten am ersten und zweiten Laufrad (10,12) anliegen,
**dass** die Krafteintragsrichtungen (K1, K2) in die Laufräder (10,12), die sich durch die Anlage des jeweiligen Laufrades (10,12) an seine zugehörige Lasteintragskante (16;36) und seine zugehörige Begrenzungskante (17;37) ergeben, gegenüber der Drehachse (11,13) des Laufrades (10,12) jeweils geneigt ausgerichtet sind,
und **dass** der maximale axiale Verschiebeweg der Laufräder (10, 12, 62) wenigstens 5mm, bevorzugt wenigstens 10mm beträgt.

2. Führungssystem (70) nach Anspruch 1, **dadurch gekennzeichnet, dass** der Rollenbock (1;21;51) ein oder mehrere weitere Laufräder (62) aufweist,
wobei ein jedes weitere Laufrad (62) jeweils um eine weitere Drehachse (63) drehbar ist, die parallel zur ersten Drehachse (11) oder parallel zur zweiten Drehachse (13) ausgerichtet ist,
und dass ein jedes weitere Laufrad (62) bezüglich seiner jeweiligen weiteren Drehachse (63) axial verschieblich gelagert ist, insbesondere wobei die Drehachsen (11,13,63) aller Laufräder (10,12,62) derart angeordnet sind, dass eine Lagergerade (58) alle Drehachsen (11,13,63) schneidet und zu allen Drehachsen (11,13,63) senkrecht verläuft.

3. Führungssystem (70) nach einem der vorhergehenden Ansprüche, **dadurch gekennzeichnet,**
**dass** im Rollenbock (1;21;51) für jedes Laufrad (10,12,62) jeweils ein Lagerachselement (4,5; 24,25) ausgebildet ist, das koaxial zur zugehörigen Drehachse (11,13,63) des Laufrades (10,12,62) verläuft, wobei das Lagerachselement (4,5; 24,25) im Rollenbock (1;21;51) starr ausgebildet ist,
und **dass** das jeweilige Laufrad (10,12,62) auf seinem zugehörigen Lagerachselement (4,5; 24,25) verschieblich gelagert ist.

4. Führungssystem (70) nach einem der vorhergehenden Ansprüche,
**dadurch gekennzeichnet, dass** die Befestigungsmittel als Schwenkhalterung oder Teil einer Schwenkhalterung ausgebildet sind, mittels der der Grundkörper (2;52) des Rollenbocks (1;21;51) um eine Schwenkachse (48) drehbar gelagert werden kann.

5. Führungssystem (70) nach Anspruch 4, **dadurch gekennzeichnet,**
**dass** die erste Drehachse (11) und die zweite Drehachse (13) bezüglich einer ersten Hilfsebene (49) gegengleich geneigt sind,
die erste Hilfsebene (49) sowohl die Schwenkachse (48) als auch eine Lagergerade (58) enthält,
wobei die Lagergerade (58) die erste Drehachse (11) und die zweite Drehachse (13) schneidet und senkrecht auf der ersten Drehachse (11) und der zweiten Drehachse (13) steht.

6. Führungssystem (70) nach einem der vorhergehenden Ansprüche,
**dadurch gekennzeichnet, dass** die erste und zweite Drehachse (11,13) bezüglich einer zweiten Hilfsebene (57) gegengleich geneigt sind,
wobei die zweite Hilfsebene (57) eine Lagergerade (58), die die erste Drehachse (11) und die zweite Drehachse (13) schneidet und zur ersten Drehachse (11) und zur zweiten Drehachse (13) senkrecht verläuft,
enthält,
und dass der Rollenbock (1;21;51) so ausgerichtet ist, dass die zweite Hilfsebene (57) vertikal orientiert ist.

7. Führungssystem (70) nach einem der vorhergehenden Ansprüche, **dadurch gekennzeichnet, dass** das Führungssystem (70) mit einer Verankerungsgruppe (60), umfassend den Rollenbock (1;21;51) und einen Ankerkopf (40), ausgebildet ist,
wobei der Ankerkopf (40) Verankerungsmittel zur Befestigung des Ankerkopfes (40) an der Bauwerksfläche (42;50), insbesondere an der überhängenden Bauwerksfläche (42;50), aufweist,
und wobei der Ankerkopf (40) ein Gegenlager für die Befestigungsmittel des Rollenbocks (1;21;51) aufweist.

8. Führungssystem (70) nach Anspruch 7, **dadurch gekennzeichnet, dass** die Befestigungsmittel des Rollenbocks (1;21;51) Fortsätze (45) zum Einkippen in das Gegenlager und zum Auskippen aus dem Gegenlager aufweisen, wobei am Ankerkopf (40) Führungen (44) für die Fortsätze (45) ausgebildet sind.

9. Führungssystem (70) nach Anspruch 8, **dadurch gekennzeichnet, dass** im eingekippten Zustand des Rollenbocks (1;21;51) in den Ankerkopf (40) der Rollenbock (1;21;51) um eine Schwenkachse (48) drehbar gelagert ist,
insbesondere wobei die Schwenkachse (48) parallel zu einer Lagergeraden (58) des Rollenbocks verläuft, die die Drehachsen (11,13,63) der Laufräder (10,12,62) schneidet und zu den Drehachsen (11,13,63) der Laufräder (10,12,62) senkrecht verläuft.

10. Führungssystem (70) nach einem der vorhergehenden Ansprüche,
**dadurch gekennzeichnet, dass** eine Sollbreite der Laufschiene (15;35), insbesondere eine Sollbeabstandung der Begrenzungskanten (17;37), in aufgesetztem Zustand mit an den Anlagekanten anliegenden Laufrädern (10,12,62) einer mittleren axialen Verschiebestellung der Laufräder (10,12,62) entspricht.

11. Führungssystem (70) nach einem der vorhergehenden Ansprüche ,
**dadurch gekennzeichnet, dass** die Haltevorrichtung (71) einen quer zur Längsrichtung der Laufschiene (15;35) verlaufenden, seitlichen Ausleger (99) zur Sicherung der Haltevorrichtung (71) gegen ein Verkippen um eine Kippachse parallel zur Längsrichtung der Laufschiene (15;35) aufweist,
insbesondere wobei am Ende des Auslegers (99) eine Laufrolle (98) angeordnet ist.

12. Montagegruppe (90), umfassend ein Führungssystem (70) nach einem der vorhergehenden Ansprüche mit mehreren Rollenböcken (1;21;51) und Haltevorrichtungen (71), und umfassend eine Montagebühne (90), die an den Haltevorrichtungen (71) befestigbar ist,
insbesondere wobei auf der Montagebühne (90) eine Betonschalung (92) aufgebaut ist, bevorzugt eine Betonschalung (92) für eine Gesimskappe (97) einer Brücke.

13. Bauwerk, an dem eine Montagegruppe (90) nach Anspruch 12 befestigt ist,
insbesondere mit einem Führungssystem nach einem der Ansprüche 7 bis 9,
wobei die Rollenböcke (1;21;51) in Verankerungsgruppen (60) integriert sind.

## Claims

1. Guide system (70) comprising
a) at least one roller block (1; 21; 51), in particular for guiding and fastening an assembly platform (94) provided with a drive rail (15; 35) during manufacture of a concrete structure,
comprising at least one first wheel (10) and a second wheel (12) which are mounted on a base body (2; 52) of the roller block (1; 21; 51) such that they can rotate,
and comprising fastening means for direct or indirect fastening of the roller block (1; 21; 51) to a structure surface (42; 50), in particular a protruding structure surface (42; 50),
wherein a first axis of rotation (11), about which the first wheel (10) can be rotated, is oriented non-parallel with respect to a second axis of rotation (13) about which the second wheel (12) can rotate, and wherein the first wheel (10) is mounted axially displaceable with respect to the first axis of rotation (11), and the second wheel (12) is mounted axially displaceable with respect to the second axis of rotation (13), and
b) at least one holding device (71), in particular wherein the at least one holding device (71) is designed for fastening an assembly platform (94),
wherein a drive rail (15; 35) is formed in the holding device (71), wherein the drive rail (15; 35) can be disposed on the wheels (10, 12, 62) of the at least one roller block (1; 21; 51),
and wherein the drive rail (15; 35) forms locating edges for abutment of the wheels (10, 12, 62),
in particular wherein an inner contour of the drive rail (15; 35) in the area of the locating edges corresponds to an outer contour of the wheels (10, 12, 62),
**characterized in that** the drive rail (15; 35) forms a first and a second load input edge (16; 36) which, in the disposed-on state, abut the first and the second wheel (10, 12) on the same side in each case,
that the drive rail (15; 35) forms a first and a second boundary edge (17; 37) which, in the disposed-on state, abut the first and the second wheel (10, 12) on opposing sides in each case,
that the directions (K1, K2) of forces applied to the wheels (10, 12), which result from the abutment of the respective wheel (10, 12) on its associated load input edge (16; 36) and its associated boundary edge (17; 37), are inclined with respect to the axis of rotation (11, 13) of the wheel (10, 12) in each case,
and that the maximum axial path of displacement of the wheels (10, 12, 62) is at least 5mm, preferably at least 10mm.

2. Guide system (70) according to claim 1, **characterized in that** the roller block (1; 21; 51) comprises one or more further wheels (62),
wherein each further wheel (62) can be rotated about one further axis of rotation (63) which is oriented parallel to the first axis of rotation (11) or parallel to the second axis of rotation (13),
and that each further wheel (62) is mounted axially displaceable with respect to its respective further axis of rotation (63),
in particular wherein the axes of rotation (11, 13, 63) of all wheels (10, 12, 62) are arranged in such a manner that a straight bearing line (58) intersects all axes of rotation (11, 13, 63) and extends perpendicularly with respect to all axes of rotation (11, 13, 63).

3. Guide system (70) according to any one of the preceding claims,
**characterized in that**
in the roller block (1; 21; 51) one bearing axis element (4, 5; 24, 25) is formed for each wheel (10, 12, 62), each bearing axis element (4, 5; 24, 25) extending in a coaxial direction with respect to the associated axis of rotation (11, 13, 63) of the wheel (10, 12, 62),
wherein the bearing axis element (4, 5; 24, 25) is rigidly formed in the roller block (1; 21; 51),
and that the respective wheel (10, 12, 62) is displaceably mounted on its associated bearing axis element (4, 5; 24, 25).

4. Guide system (70) according to any one of the preceding claims,
**characterized in that** the fastening means are designed as a swivel holder or part of a swivel holder, by means of which the base body (2; 52) of the roller block (1; 21; 51) can be rotatably mounted about a swivel axis (48).

5. Guide system (70) according to claim 4, **characterized in that**
the first axis of rotation (11) and the second axis of rotation (13) are diametrically oppositely inclined with respect to a first auxiliary plane (49),
the first auxiliary plane (49) containing both the swivel axis (48) and a straight bearing line (58),
wherein the straight bearing line (58) intersects the first axis of rotation (11) and the second axis of rotation (13) and is perpendicular to the first axis of rotation (11) and the second axis of rotation (13).

6. Guide system (70) according to any one of the preceding claims,
**characterized in that** the first and the second axis of rotation (11, 13) are diametrically oppositely inclined with respect to a second auxiliary plane (57), wherein the second auxiliary plane (57) contains a straight bearing line (58), which intersects the first axis of rotation (11) and the second axis of rotation (13) and extends perpendicularly with respect to the first axis of rotation (11) and the second axis of rotation (13),
and that the roller block (1; 21; 51) is oriented in such a manner that the second auxiliary plane (57) is vertically oriented.

7. Guide system (70) according to any one of the preceding claims,
**characterized in that** the guide system (70) is designed with an anchoring group (60) comprising the roller block (1; 21; 51) and a she-bolt (40),
wherein the she-bolt (40) comprises anchoring means for mounting the she-bolt (40) to the structure surface (42; 50), in particular to the protruding structure surface (42; 50),
and wherein the she-bolt (40) has a counter bearing for the fastening means of the roller block (1; 21; 51).

8. Guide system (70) according to claim 7, **characterized in that** the fastening means of the roller block (1; 21; 51) comprise extensions (45) for tilting into the counter bearing and for tilting out of the counter bearing, wherein guides (44) for the extensions (45) are formed on the she-bolt (40).

9. Guide system (70) according to claim 8, **characterized in that** in the state of the roller block (1; 21; 51) tilted into the she-bolt (40), the roller block (1; 21; 51) is mounted such that it can be rotated about a swivel axis (48),
in particular wherein the swivel axis (48) extends parallel with respect to a straight bearing line (58) of the roller block, wherein the straight bearing line (58) intersects the axes of rotation (11, 13, 63) of the wheels (10, 12, 62) and extends perpendicularly with respect to the axes of rotation (11, 13, 63) of the wheels (10, 12, 62).

10. Guide system (70) according to any one of the preceding clams, **characterized in that** a target width of the drive rail (15; 35), in particular a target spacing of the boundary edges (17; 37), in the disposed-on state with the wheels (10, 12, 62) abutting the locating edges corresponds to a middle axial displacement position of the wheels (10, 12, 62).

11. Guide system (70) according to any one of the preceding claims, **characterized in that** the holding device (71) comprises a lateral kicker brace (99), which extends transversely with respect to the longitudinal direction of the drive rail (15; 35) for securing the holding device (71) against tilting about a tilting axis parallel to the longitudinal direction of the drive rail (15; 35),
in particular wherein a roller (98) is arranged at the end of the kicker brace (99).

12. Assembly group (90) comprising a guide system (70) according to any one of the preceding claims, comprising a plurality of roller blocks (1; 21; 51) and holding devices (71), and comprising an assembly platform (90) which can be fastened to the holding devices (71),
in particular wherein a concrete formwork (92) is mounted on the assembly platform (90), preferably a concrete formwork (92) for a cantilevered parapet (97) of a bridge.

13. Structure to which there is mounted an assembly group (90) in accordance with claim 12, in particular comprising a guide system according to any one of the clams 7 through 9, wherein the roller blocks (1; 21; 51) are integrated in anchoring groups (60).

## Revendications

1. Système de guidage (70) comprenant
a) au moins un support à rouleaux (1 ; 21 ; 51) affecté, en particulier, au guidage et à la fixation d'une plate-forme de montage (94) pourvue d'un rail de roulement (15 ; 35), lors de l'exécution d'un ouvrage de construction en béton, incluant au moins une première roue de roulement (10) et une deuxième roue de roulement (12), montées à rotation sur un corps de base (2 ; 52) dudit support à rouleaux (1 ; 21 ; 51),
et incluant des moyens de fixation dévolus à la fixation, directe ou indirecte, dudit support à rouleaux (1 ; 21 ; 51) à une surface (42 ; 50) de l'ouvrage de construction, notamment à une surface (42 ; 50) en surplomb sur ledit ouvrage de construction,
sachant qu'un premier axe de rotation (11), autour duquel la première roue de roulement (10) peut tourner, est orienté non parallèlement à un deuxième axe de rotation (13) autour duquel la deuxième roue de roulement (12) peut tourner, et sachant que ladite première roue de roulement (10) est montée avec faculté de déplacement axial par rapport audit premier axe de rotation (11), et que ladite deuxième roue de roulement (12) est montée avec faculté de déplacement axial par rapport audit deuxième axe de rotation (13), et
b) au moins un dispositif de retenue (71), sachant notamment que ledit dispositif de retenue (71), à présence minimale, est réalisé en vue de la fixation d'une plate-forme de montage (94),
ledit dispositif de retenue (71) étant intérieurement muni d'un rail de roulement (15 ; 35) pouvant être mis en place sur les roues de roulement (10, 12, 62) dudit support à rouleaux (1 ; 21 ; 51) à présence minimale,
et sachant que ledit rail de roulement (15 ; 35) procure des arêtes de contact conférant un appui auxdites roues de roulement (10, 12, 62),
sachant notamment qu'un profil intérieur dudit rail de roulement (15 ; 35) correspond à un profil extérieur desdites roues de roulement (10, 12, 62) dans la région desdites arêtes de contact,
**caractérisé par le fait**
**que** le rail de roulement (15 ; 35) procure des première et seconde arêtes (16 ; 36) d'introduction de charges qui portent respectivement, à l'état mis en place, contre les première et deuxième roues de roulement (10, 12) à partir du même côté,
**que** ledit rail de roulement (15 ; 35) procure des première et seconde arêtes de délimitation (17 ; 37) qui portent respectivement, à l'état mis en place, contre lesdites première et deuxième roues de roulement (10, 12) à partir de côtés opposés,
**que** les directions (K1, K2) d'introduction de forces dans lesdites roues de roulement (10, 12), résultant de l'appui de la roue de roulement considérée (10, 12) contre son arête associée (16 ; 36) d'introduction de charges et contre son arête associée de délimitation (17 ; 37), sont respectivement orientées à l'oblique par rapport à l'axe de rotation (11, 13) de ladite roue de roulement (10, 12),
et **que** la course maximale de déplacement axial desdites roues de roulement (10, 12, 62) mesure au moins 5 mm, de préférence au moins 10 mm.

2. Système de guidage (70) selon la revendication 1, **caractérisé par le fait**
**que** le support à rouleaux (1 ; 21 ; 51) comprend une ou plusieurs roue(s) de roulement (62) supplémentaire(s),
chacune des roues de roulement (62) supplémentaires étant apte à tourner autour d'un axe respectif de rotation (63) supplémentaire, orienté parallèlement au premier axe de rotation (11) ou parallèlement au deuxième axe de rotation (13),
et **que** chacune desdites roues de roulement (62) supplémentaires est montée avec faculté de déplacement axial par rapport à son axe respectif de rotation (63) supplémentaire,
sachant notamment que les axes de rotation (11, 13, 63) de toutes les roues de roulement (10, 12, 62) sont agencés de façon telle qu'une ligne droite de montage (58) soit sécante à tous les axes de rotation (11, 13, 63), et s'étende perpendiculairement à tous les axes de rotation (11, 13, 63).

3. Système de guidage (70) selon l'une des revendications précédentes, **caractérisé par le fait**
**que** le support à rouleaux (1 ; 21 ; 51) est intérieurement muni, pour chaque roue de roulement (10, 12, 62), d'un élément respectif (4, 5 ; 24, 25) formant axe de palier et s'étendant coaxialement à l'axe de rotation associé (11, 13, 63) de ladite roue de roulement (10, 12, 62), ledit élément (4, 5 ; 24, 25), formant axe de palier, étant ménagé rigidement dans ledit support à rouleaux (1 ; 21 ; 51),
et **que** la roue de roulement (10, 12, 62) considérée est montée avec faculté de déplacement sur son élément associé (4, 5 ; 24, 25) formant axe de palier.

4. Système de guidage (70) selon l'une des revendications précédentes, **caractérisé par le fait que** les moyens de fixation sont réalisés sous la forme d'un élément de maintien pivotant, ou d'une partie d'un élément de maintien pivotant, autorisant un montage rotatif du corps de base (2 ; 52) du support à rouleaux (1 ; 21 ; 51) autour d'un axe de pivotement (48).

5. Système de guidage (70) selon la revendication 4, **caractérisé par le fait**
**que** le premier axe de rotation (11) et le deuxième axe de rotation (13) sont inclinés avec symétrie spéculaire par rapport à un premier plan auxiliaire (49),
lequel premier plan auxiliaire (49) contient, à la fois, l'axe de pivotement (48) et une ligne droite de montage (58),
ladite ligne droite de montage (58) étant sécante au premier axe de rotation (11) et au deuxième axe de rotation (13), et se dressant perpendiculairement audit premier axe de rotation (11) et audit deuxième axe de rotation (13).

6. Système de guidage (70) selon l'une des revendications précédentes, **caractérisé par le fait que** les premier et deuxième axes de rotation (11, 13) sont inclinés avec symétrie spéculaire par rapport à un second plan auxiliaire (57),
lequel second plan auxiliaire (57) contient une ligne droite de montage (58) qui est sécante au premier axe de rotation (11) et au deuxième axe de rotation (13), et s'étend perpendiculairement audit premier axe de rotation (11) et audit deuxième axe de rotation (13),
et que le support à rouleaux (1 ; 21 ; 51) est orienté de façon telle que ledit second plan auxiliaire (57) se dresse verticalement.

7. Système de guidage (70) selon l'une des revendications précédentes, **caractérisé par le fait que** ledit système de guidage (70) est équipé d'un groupe d'ancrage (60) incluant le support à rouleaux (1 ; 21 ; 51) et une tête d'ancrage (40),
la tête d'ancrage (40) comportant des moyens d'ancrage affectés à la fixation de ladite tête d'ancrage (40) à la surface (42 ; 50) de l'ouvrage de construction, en particulier à la surface (42 ; 50) en surplomb sur ledit ouvrage de construction,
et ladite tête d'ancrage (40) étant dotée d'une contre-butée assignée aux moyens de fixation dudit support à rouleaux (1 ; 21 ; 51).

8. Système de guidage (70) selon la revendication 7, **caractérisé par le fait que** les moyens de fixation du support à rouleaux (1 ; 21 ; 51) présentent des appendices (45) conçus pour pénétrer dans la contre-butée par basculement et pour sortir de ladite contre-butée par basculement, sachant que des guides (44), assignés auxdits appendices (45), sont ménagés sur la tête d'ancrage (40).

9. Système de guidage (70) selon la revendication 8, **caractérisé par le fait que** le support à rouleaux (1 ; 21 ; 51) est monté à rotation autour d'un axe de pivotement (48), à l'état dudit support à rouleaux (1 ; 21 ; 51) introduit dans la tête d'ancrage (40) par basculement,
sachant notamment que ledit axe de pivotement (48) s'étend parallèlement à une ligne droite (58) de montage dudit support à rouleaux qui est sécante aux axes de rotation (11, 13, 63) des roues de roulement (10, 12, 62), et s'étend perpendiculairement auxdits axes de rotation (11, 13, 63) desdites roues de roulement (10, 12, 62).

10. Système de guidage (70) selon l'une des revendications précédentes, **caractérisé par le fait qu'**une largeur de consigne du rail de roulement (15 ; 35), en particulier un espacement de consigne des arêtes de délimitation (17 ; 37), correspond à une position centrale résultant d'un déplacement axial des roues de roulement (10, 12, 62), à l'état mis en place dans lequel lesdites roues de roulement (10, 12, 62) sont en applique contre les arêtes de contact.

11. Système de guidage (70) selon l'une des revendications précédentes, **caractérisé par le fait que** le dispositif de retenue (71) présente un bras latéral (99) saillant en porte-à-faux et s'étendant transversalement par rapport à la direction longitudinale du rail de roulement (15 ; 35), en vue de prévenir une culbute dudit dispositif de retenue (71) autour d'un axe de basculement, parallèlement à ladite direction longitudinale dudit rail de roulement (15 ; 35),
sachant notamment qu'un galet de roulement (98) est implanté à l'extrémité dudit bras (99) saillant en porte-à-faux.

12. Groupe de montage (90) incluant un système de guidage (70) conforme à l'une des revendications précédentes, comprenant plusieurs supports à rouleaux (1 ; 21 ; 51) et dispositifs de retenue (71), et incluant une plate-forme de montage (90) qui peut être fixée auxdits dispositifs de retenue (71),
sachant notamment qu'un coffrage de bétonnage (92), de préférence un coffrage de bétonnage (92) destiné à une corniche (97) d'un pont, est érigé sur ladite plate-forme de montage (90).

13. Ouvrage de construction auquel est fixé un groupe de montage (90) conforme à la revendication 12,
comportant notamment un système de guidage conforme à fune des revendications 7 à 9, les supports à rouleaux (1 ; 21 ; 51) étant intégrés dans des groupes d'ancrage (60).
